# EUROPÄISCHE PATENTSCHRIFT

(11) **EP 1 685 436 B1**
(45) Veröffentlichungstag und Bekanntmachung des Hinweises auf die Patenterteilung: **14.01.2009**
(21) Anmeldenummer: 04803145.4
(22) Anmeldetag: 15.11.2004
(51) Int. Cl.: G02B 6/28, G02B 1/04, B23B 1/00

(54) **VERFAHREN ZUM ERZEUGEN VON PLANFL CHEN AM UMFANG OPTISCHER P OLYMERFASERN RUNDEN QUERSCHNITTS**
METHOD FOR CREATING FLAT SURFACES ON THE CIRCUMFERENCE OF POLYMER OPTICAL FIBRES WITH A ROUND CROSS-SECTION
PROCEDE POUR GENERER DES SURFACES PLANES SUR LE POURTOUR DE FIBRES OPTIQUES POLYMERES DE SECTION TRANSVERSALE CIRCULAIRE

(30) Priorität: 19.11.2003 DE 10354008
(43) Veröffentlichungstag der Anmeldung: 02.08.2006
(73) Patentinhaber: DIEMOUNT GmbH, 38855 Wernigerode (DE)
(72) Erfinder: KRAGL, Hans, 31199 Diekholzen (DE)
(74) Vertreter: Strobel, Wolfgang
(86) Internationale Anmeldenummer: PCT/EP2004/012928
(87) Internationale Veröffentlichungsnummer: WO 2005/050272

(56) Entgegenhaltungen:
- EP-A- 0 619 506

## Beschreibung

### Gebiet der Erfindung

Die vorliegende Erfindung bezieht sich allgemein auf die Herstellung von optischen Kopplern für optische Polymerfasern (nachfolgend "POF" aus dem englischen "polymer optical fiber"), und im Besonderen auf ein Verfahren zum Erzeugen von Planflächen am Umfang solcher Fasern runden Querschnitts.

### Technischer Hintergrund der Erfindung

Passive Koppler für die optische Polymerfaser werden benötigt, um den von optischen Signalen auf der POF getragenen Datenstrom von einer POF auf zwei oder mehr POFs zu übertragen. Anwendungen hierfür sind optische Übertragungssysteme mit Verteilfunktion, Messsysteme, bei denen eine ständige Kontrolle der optischen Leistung im Betrieb erfolgen muss, oder optische, bidirektional arbeitende Übertragungssysteme, bei denen auf nur einer einzigen POF sowohl eingehende wie auch ausgehende Signale übertragen werden (siehe hierzu W. Daum, J. Krauser, P. Zamzow, O. Ziemann: "POF Optische Polymerfasern für die Datenkommunikation", Springer Verlag 2001, S. 150). Bei diesen bidirektionalen Systemen sind der Sender und der Empfänger eines Netzknotens über einen optischen Splitter an die Übertragungsfaser angeschlossen.

### Stand der Technik

Während der vergangenen 20 Jahre wurde in der Fachwelt eine große Anzahl verschiedener Technologien zur Herstellung von optischen Splittern vorgestellt. Faseroptische Koppelelemente, integrierte optische Koppelelemente und auch Konstruktionen mit spritzgegossenen Koppelelementen sind bekannt. Die sogenannten Schliffkoppler sind wegen ihrer konstruktiven Einfachheit und hohen optischen Qualität von besonderem Interesse (siehe das vorgenannte Werk von W. Daum u.a.).

Wie der Name Schliffkoppler schon sagt, wird zur Herstellung eines Schlifflcopplers der Endabschnitt einer POF schräg verlaufend auf den halben Durchmesser der POF plan abgeschliffen und anschließend mit einem in gleicher Weise hergestellten Endabschnitt einer zweiten POF so zusammengefügt, dass die beiden durch das Abschleifen entstandenen halbkreisförmigen Stirnflächen der abgeschliffenen POFs sich zu einem Vollkreis ergänzen, der nach Planschleifen der Stirnfläche genau auf die Stirnfläche einer dritten, abgehenden POF passt. Die aneinander anstoßenden Stirnflächen und die schräglaufenden Schliffflächen werden gewöhnlich mittels eines transparenten Klebers miteinander verklebt. Bei diesem Verfahren ist es wichtig, die Oberfläche des schräg verlaufenden Anschliffbereiches der erstgenannten POFs, der in Achsrichtung der dritten POF verläuft, in optischer Qualität, d.h. im Allgemeinen hochglänzend, herzustellen. Das in der POF geführte Licht darf nämlich an dieser Oberfläche nicht gestreut werden. Kleinste Rauhigkeiten führen zu Streuverlusten und damit zu Qualitätseinbußen des Splitters.

Aus EP 0 619 506 A2 ist ein Verfahren zum Erzeugen einer Koppelfläche an einer ersten Lichtleitfaser für den Anschluss einer an ihrer Stirnseite schräg plan angeschliffenen zweiten, abzweigenden Lichtleitfaser bekannt, bei dem die erste Lichtleitfaser auf einen kreisrunden Dorn gewickelt und dann an einer Stelle flach bis auf die Hälfte ihrer Dicke abgeschliffen wird. Es entsteht hierdurch eine elliptische Schlifffläche, die zu der elliptischen Schlifffläche der zweiten Lichtleitfaser passt. Beide Lichtleitfasern werden dann an ihren Schliffflächen miteinander verklebt.

Auf der Basis des Schliffkopplers lassen sich Koppler mit einem Excess Loss von unter 1dB herstellen. Der Excess Loss beschreibt die optischen Verluste des Splitters, die über die reinen Teilungsverluste hinausgehen. Auch ist es nicht schwierig, durch unsymmetrisches Anschleifen der beiden POFs Splitter mit einem nahezu beliebigen Teilungsverhältnis herzustellen.

Bis heute hat sich jedoch eine Serienproduktion dieser Splitter nicht durchsetzen können, weil die Splitter, wie ihr Name schon sagt, durch Nassschleifen auf einer wassergespülten Poliermaschine hergestellt werden müssen, um eine optisch hochwertige Oberfläche zu erhalten. Hierbei werden die POFs zunächst in einen Polierhalter eingespannt, dieser wird manuell auf die Poliermaschine gesetzt, und anschließend wird die POF zunächst mit grobem Polierpapier, später mit immer feinerem Polierpapier auf Endmaß bearbeitet. Jeder Wechsel des Polierpapiers muss in Handarbeit durchgeführt werden. Das Polierpapier hat eine nur begrenzte Standzeit und ist auch relativ teuer, so dass es in der Massenfertigung zu einem signifikanten Anteil zu den Gesamtkosten beiträgt.

Versuche, mit anderen spanabhebenden Verfahren die vorgenannte Bearbeitung mit Nasspolitur zu ersetzen, scheitern in der Regel an der geforderten Präzision und der unzureichenden Oberflächenqualität, solange Werkzeuge aus Werkzeugstahl oder Hartmetall eingesetzt werden.

Aus der Produktionstechnik optischer Elemente, wie Spiegel aus Nichteisenwerkstoffen, oder Kunststofflinsen, ist dagegen bekannt, dass man bei Verwendung von Diamantfräsem und Diamantdrehmeißeln glänzende optische Oberflächen erzeugen kann, die nicht zusätzlich nachpoliert werden müssen. Es ist auch bekannt, dass durch den Einsatz eines sehr schnell rotierenden Diamantfräsers die Stirnfläche einer POF so bearbeitet werden kann, dass eine glänzende Oberfläche entsteht. Aus der DE 198 61 139 C2 ist auch bekannt, den Querschnitt einer POF durch Erwärmung derselben und Einpressen in eine Form des gewünschten Querschnitts zu verändern. Für das Abtragen eines Teils des Querschnitts einer POF, der im Übrigen unverändert bleiben soll, ist diese Verfahrensweise aber nicht geeignet.

### Übersicht über die Erfindung

Der Erfindung liegt daher die Aufgabe zugrunde, ein Verfahren und eine Vorrichtung anzugeben, mit denen optische Polymerfasern in großer Stückzahl wirtschaftlich und mit großer Güte so bearbeitet werden können, dass sie anschließend zu verlustarmen Kopplern montiert werden können.

Diese Aufgabe wird hinsichtlich des Verfahrens durch die in Anspruch 1 bzw. 2 angegebene Erfindung und hinsichtlich der Vorrichtung durch die in Anspruch 8 bzw. 9 angegebene Erfindung gelöst. Vorteilhafte Weiterbildungen davon sind Gegenstand der jeweils abhängigen Ansprüche.

Für den Drehvorgang wird vorzugsweise ein Diamantdrehmeißel verwendet, weil er polierte Oberflächen erzeugt, die keiner Nachbehandlung bedürfen. Günstig ist es, wenn die Polymerfaser auf einen Halbkreisquerschnitt abgedreht wird und ferner wenn die Polymerfaser während des Drehvorgangs unter einer Zugspannung gehalten wird.

Beim Drehen sind in der Praxis Schnittgeschwiridigkeiten von etwa 10 m/s vorteilhaft. Höhere Schnittgeschwindigkeiten sind möglich, doch ist ein begrenzender Faktor eine etwaige Unwucht des Doms mit der darauf gewickelten Polymerfaser, die bei höheren Drehzahlen zu einer Vibration führt, die ungenaue Arbeitsergebnisse liefert. Durch höhere Präzision ist dieses Problem allerdings beherrschbar. Die Vorstellgeschwindigkeit des beim Abdrehen verwendeten Schneidwerkzeugs kann größer als 2 mm sein. Mit einem Schneidvorgang lassen sich etwa 20 bis 30 µm des Materials der Polymerfaser abtragen. Das Schneidwerkzeug muss also mehrmals an dem Werkstück vorbeigeführt werden, wenn bis zur Hälfte des Durchmessers der Polymerfaser abgetragen werden soll. Es hat sich zur Erzielung einer hohen Qualität der abgedrehten Oberfläche als günstig erwiesen, wenn beim letzten Schneidvorgang nur etwa 10 µm des Materials der Polymerfaser abgetragen wird.

Von besonderem Vorteil ist es, wenn man die zusammenzufügenden, polierten Flächen der POFs vor dem Zusammenfügen derselben jeweils mit einer etwa 100 nm dicken Schichtfolge aus SiO₂, Ag und SiO₂ im Vakuum beschichtet. Hierdurch wird die Übersprechdämpfung ganz erheblich, nämlich bis zu 60 dB, gesteigert, ohne dass der Excess Loss dadurch wesentlich verschlechtert wird. Die Beschichtung sollte bei Temperaturen unterhalb von 70 °C erfolgen, damit die POF nicht beschädigt oder gar zerstört wird.

Anstelle des Einsatzes von SiO₂ kann bei der Beschichtung auch in der bei Kraftfahrzeug-Scheinwerferspiegeln verwendeten Technik Gebrauch gemacht werden, wo Polymer, Ag und Polymer in dieser Reihenfolge auf einen Träger, hier die nach dem erfindungsgemäßen Verfahren abgedrehten POFs, aufgebracht werden. Der Vorteil ist, dass man hierzu auf die seit langem bewährten Beschichtungstechniken zurückgreifen kann.

Versuche mit einer Beschichtung aus 100 nm HMDS, 100 nm Al und 100 nm HMDS haben gezeigt, dass die mit den so bearbeiteten POFs hergestellten Koppler fast gleich gute Ergebnisse liefern, wie Koppler, deren POFs mit der o.g. Schichtfolge aus SiO₂, Ag und SiO₂ versehen waren. Gegenüber letzteren haben die erstgenannten den Vorteil leichterer und preisgünstigerer Herstellbarkeit. HMDS ist das Fachkürzel für Hexamethyldisilan, das vorwiegend in der Halbleitertechnik als Haftvermittler vor dem Aufbringen eines Photoresist auf einem Substrat eingesetzt wird. HMDS-Schichten in Verbindung mit einer Ag-Schicht sind ebenfalls von Vorteil. Die Schichtdicken sind auf die obigen Beispiele nicht beschränkt. HMDS hat darüber hinaus für die vorliegende Erfindung die günstige Eigenschaft, dass sein Brechungsindex niedriger als derjenige des Kemmaterials der POF ist, die vorzugsweise aus PMMA besteht. Hierdurch wird eine Totalreflexion an der Grenzfläche zwischen der POF und der HMDS-Schicht gefördert. Weiterhin schließt das HMDS das eingebettete Aluminium dicht ab und verhindert dadurch eine Korrosion des Aluminiums. Verwendet man Silber anstelle von Aluminium zwischen den HMDS-Schichten, ist die korrosionsschützende Wirkung der HMDS-Deckschicht noch bedeutungsvoller.

Günstig ist es, wenn der Wickeldorn eine wendelförmig verlaufende Umfangsnut zur Aufnahme der Polymerfaser hat.

Eine nach dem erfindungsgemäßen Verfahren bearbeitete Polymerfaser für die Verwendung in einem Splitter mit einem von einer Planfläche begrenzten Endabschnitt teilkreisförmigen Querschnitts zeichnet sich dadurch aus, dass der Längenabschnitt teilkreisförmigen Querschnitts in einem vom Ende der Polymerfaser ausgehenden Teilbereich einen konstanten Querschnitt hat. Der Aufbau eines Splitters gestaltet sich dadurch besonders günstig.

### Kern und Vorteile der Erfindung

Der Kern der Erfindung besteht darin, dass eine lange POF auf einen Wickeldorn unrunden Querschnitts aufgewickelt wird und anschließend in einer Drehbank durch Langdrehen mit Hilfe eines Drehmeißels hoher Güte, insbesondere eines Diamantdrehmeißels, so abgedreht wird, dass nebeneinanderliegende Umfangsabschnitte der POF abgetragen werden, die sich mit Abschnitten abwechseln, die von dem Drehmeißel nicht erreicht werden. Die POF braucht dann nur noch in der Mitte der abgedrehten Bereiche und in den nicht abgedrehten Bereichen quer geteilt zu werden; um POF-Stücke zu erhalten, die plane Flächenabschnitte an ihrem Umfang haben, die in den durch das Querschneiden erzeugten Stirnflächen der POF-Stücke enden, so dass diese Stirnflächen jeweils nurmehr Teilkreisflächengestalt haben.

Aus zwei solcher POF-Stücke, deren Stirnflächen sich zu einer Kreisfläche ergänzen, lässt sich dann zusammen mit einem POF-Stück, , dessen Ende einen dazu passenden kreisrunden Querschnitt hat, durch Stoßkopplung ein Splitter zusammensetzen.

Im einfachsten Falle sind die Teilkreisflächen an den Enden der durch Drehen bearbeiteten POF-Stücke Halbkreisflächen, so dass zwei gleiche solcher POF-Stücke mit einem dritten POF-Stück, dessen Anschlussende kreisförmigen Querschnitt hat, zu einem Splitter zusammengesetzt werden können.

Im Falle, dass die Aufteilung des aus dem dritten POF-Stück austretenden Lichts auf die sich anschließenden POF-Stücke des Splitters ungleich sein soll, kann man vorsehen, dass von dem einen dieser POF-Stücke nur wenig Material und von dem anderen dieser POF-Stücke entsprechend mehr Material durch Drehen abgetragen wird, so dass sich die Stirnflächen der auf diese Weise bearbeiteten POF-Stücke wieder zu einer Kreisfläche ergänzen. Es versteht sich, dass im letztgenannten Falle zwei unterschiedliche Drehvorgänge ausgeführt und die unterschiedlichen POF-Stücke als Arbeitsergebnisse dieser Drehvorgänge miteinander kombiniert werden müssen. Ungleich teilende, d.h. unsymmetrische Splitter werden beispielsweise in der Messtechnik benötigt, wenn nur ein kleiner Teil des Lichts zu Kontrollzwecken abgezweigt werden soll.

Vorteilhaft gegenüber dem Stand der Technik ist die erfindungsgemäße Fertigungsmethode, weil:
1. die Oberflächen der mit dem Drehmeißel bearbeiteten Flächen von hoher Qualität, d.h. optisch glatt und glänzend sind. Es wird dazu keine aufwendige Politur mit Nassschleifpapieren unterschiedlichen Körnungen benötigt;
2. das Verfahren durch Vergrößerung des Durchmessers und der Länge des Wickeldorns so ausgelegt werden kann, dass mit einem einzigen Langdrehvorgang eine sehr große Anzahl von Splittern hergestellt werde kann. Beispielsweise können mit Hilfe eines Wickeldorns von 100 mm Durchmesser und 300 mm Länge in einem Bearbeitungsschritt die Komponenten für 100 Splitter hergestellt werden. Wird der Wickeldorn auf den Durchmesser 400 mm und die Länge 2 m vergrößert, wird die Herstellung der Komponenten von 4000 Splittern in einem einzigen Langdrehvorgang möglich. Die Größe des Wickeldorns und damit der Ausstoß der Teile pro Bearbeitungsvorgang ist allein durch die Größe der verfügbaren Drehbank bestimmt.

Es ist vorteilhaft, wenn der Wickeldorn eine wendelförmig verlaufende Umfangsrille aufweist, in die die POF eingelegt werden kann. Die Führung der POF am Wickeldorn wird dadurch verbessert. Weiter ist es von Vorteil, wenn die POF auf den Wickeldorn unter einer geringen Dehnung aufgewickelt wird. Auch hierdurch wird die Lagestabilisierung verbessert. Außerdem werden durch die Dehnung die in Längsrichtung der POF eingefrorenen inneren Spannungen der POF kompensiert.

Mit dem erfindungsgemäßen Verfahren können POFs aller Durchmesser bearbeitet werden und unabhängig davon, ob es sich um blanke POFs handelt oder sie mit einer Umhüllung, beispielsweise aus Polyethylen, versehen sind.

Der Querschnitt des Wickeldorns ist im Wesentlichen zylindrisch und weist im einfachsten Falle einen gegenüber einem größten Durchmesser zurückgesetzten Umfangsbereich auf, der über einen ausreichend großen Sektor wenigstens so weit zurückgesetzt ist, dass die sich in diesem Sektor erstreckenden Abschnitte der auf den Wickeldorn gewickelten POF von dem Drehmeißel nicht berührt werden, wenn dieser die auf dem größten Durchmesser und in dessen Nachbarschaft befindlichen Abschnitte der POF beim Drehvorgang teilweise abträgt. Mit einem solchen Wickeldorn sind dann pro Drehvorgang eine Anzahl mit längslaufenden Planflächen versehener POF-Stücke herstellbar, die doppelt so groß ist, wie die Anzahl der Windungen der POF auf dem Wickeldorn. Hat der Querschnitt des Wickeldorns zwei solcher zurückgesetzter Umfangsbereiche, die vorzugsweise einander diametral gegenüberliegend angeordnet und durch einen größten Kreisdurchmesser voneinander getrennt sind, können dementsprechend doppelt so viele POF-Stücke hergestellt werden. Je nach Durchmesser des Wickeldorns können auch mehr als zwei solcher zurückgesetzter Umfangsbereiche mit dazwischen liegenden größten Kreisdurchmessern vorhanden sein, woraus sich die schon erwähnte Zahl von 4000 ergeben kann.

Vorteilhaft erstreckt sich ein solcher größter Kreisdurchmesser über einen vorbestimmten Winkelsektor. Es ergibt sich dann ein von dem Drehmeißel bearbeiteter Längenabschnitt pro Windung der POF auf dem Wickeldorn, in dem die POF gleichmäßig abgetragen ist. Zwei aus der langen, bearbeiteten POF geschnittene POF-Stücke dieser Art, die an ihren abgedrehten Längenabschnitten parallel aneinander gefügt werden, haben bei passender Bemessung des Umfangs abgetragenen Materials in diesem Bereich zusammen eine zylindrische Gestalt, die es ermöglicht, die beiden POF-Stücke in eine zylindrische Hülse einzustecken, in deren anderes Ende jenes POF-Stück eingesteckt wird, an das die beiden bearbeiteten POF-Stücke angekoppelt werden sollen.

Die Stirnflächen der aneinanderstoßenden POFs sollten durch geeignete, bekannte Verfahren glattpräpariert werden.

Es ist auch möglich, die durch Abdrehen erzeugten Planflächen an den POF-Stücken so auszubilden, dass sie vom Umfang schräg in Richtung auf eines der freien Enden der POF-Stücke verlaufen. In diesem Falle ist der Wickeldorn so zu dimensionieren, dass der Radius des Wickeldorns von einem größten Radius ausgehend beidseitig mit zunehmender Winkelabweichung linear abnimmt. Zwei zum Paar zusammengestellte POF-Stücke bilden dann aber nur an ihren Stirnflächen zusammen eine Kreisfläche, was ihre Halterung in einem Splittergehäuse gegenüber der vorerwähnten Lösung mit einer ein Gehäuse bildenden zylindrischen Hülse etwas komplizierter macht.

Die Erfindung wird nachfolgend unter Bezugnahme auf die Zeichnungen anhand eines Ausführungsbeispiels näher erläutert.

### Kurzbeschreibung der Zeichnungen

- Fig. 1: zeigt schematisch das Prinzip eines Splitters nach dem Stand der Technik.
- Fig. 2a: zeigt schematisch in Seitenansicht einen Wickeldorn mit darauf gewickelter POF und einen seitlich daran angesetzten Drehmeißel.
- Fig. 2b: zeigt eine Radialschnittansicht längs der Linie IIb - IIb in Fig. 2a des Wickeldorns mit darauf gewickelter POF vor der Drehbearbeitung.
- Fig. 3a: zeigt in Seitenansicht den Wickeldorn nach Fig. 2a mit darauf gewickelter POF nach der Drehbearbeitung.
- Fig. 3b: zeigt als Schnitt längs der Linie IIIb - IIIb in Fig. 3a eine der Fig. 2b vergleichbare Darstellung der POF auf dem Wickeldorn nach der Drehbearbeitung.
- Fig. 4: zeigt eine der Fig. 3b vergleichbare Darstellung zur Erläuterung der Stellen, wo die bearbeitete POF zu zertrennen ist, um die für einen Splitter benötigten, mit plangedrehten Flächen versehenen POF-Stücke herzustellen, und
- Fig. 5: zeigt zwei jeweils auf einem Längenabschnitt gleichmäßig zur Hälfte abgedrehte POFs, die mit einer dritten POF in einer Hülse zu einem Splitter zusammengesetzt sind.

### Detaillierte Beschreibung der Erfindung

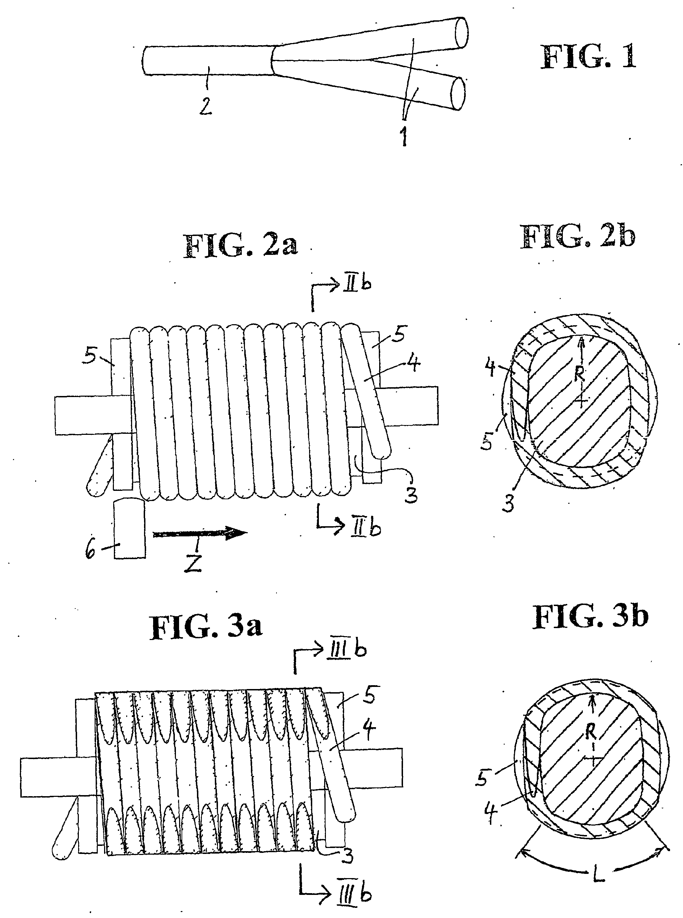

Fig. 1 zeigt den prinzipiellen Aufbau eines bekannten Schliffkopplers aus drei POFs, die an geschliffenen Enden zusammengefügt sind. Diese Darstellung ist aus der eingangs genannten Veröffentlichung von Daum et al. entnehmbar. Der Schliffkoppler besteht aus zwei POF-Stücken 1, deren Umfangsflächen im Bereich eines ihrer Enden jeweils schräg abgeschliffen sind und an ihren planen Schliffflächen aneinander anliegen, so dass ihre Achsen in einem spitzen Winkel zueinander verlaufen. Weiterhin besteht der Schliffkoppler nach Fig. 1 aus einem dritten POF-Stück 2. Die Stirnflächen der schräg angeschliffenen POF-Stücke 1 bilden zusammen eine Kreisfläche eines Durchmessers, der dem Durchmesser der dritten POF 2 entspricht. Alle Stirnflächen sind eben und poliert, um Streuungsverluste zu minimieren.

Anhand der Fig. 2a bis 4 wird nun das erfindungsgemäße Verfahren erläutert.

Auf einen Wickeldorn 3 ist gemäß Fig. 2a eine POF 4, vorzugsweise unter leichter Dehnung derselben, aufgewickelt. Der Wickeldorn 3 hat gemäß Fig. 2b einen unrunden Querschnitt mit zwei diametral einander gegenüberliegenden Sektoren eines Radius R und zwei dazwischenliegenden Abschnitten, in denen der Umfang des Wickeldorns 3 durch Verminderung des Radius' zurückgesetzt ist. Der Wickeldorn 3 ist an seinen Enden von zylindrischen Abschnitten 5 begrenzt.

Der Wickeldorn 3 ist in einer in den Zeichnungen nicht dargestellten Drehbank gehalten und um eine Achse in Drehung versetzt, die mit dem Mittelpunkt des Radius R und der Achse der zylindrischen Abschnitte 5 zusammenfällt. Zur Drehbank gehört ein Drehmeißel 6, der zur Bearbeitung der POF 4 in Richtung des Pfeiles Z, also parallel zur Drehachse des Wickeldorns 3, bewegt wird. Der Abstand des Drehmeißels 6 in Bezug auf die Achse des Wickeldorns 3 ist so eingestellt, dass sich die POF 4 in denjenigen Sektoren des Wickeldorns 3, die durch den Radius R bestimmt sind, im Bewegungsweg der Schneidkante des Drehmeißels 6 befindet.

Gemäß Fig. 3a wird daher durch den Drehvorgang in den Sektoren des Wickeldorns 3, die durch den Radius R bestimmt sind, Material von der POF 4 abgetragen. Das Ergebnis dieses Bearbeitungsvorgangs ist in den Fig. 3a und 3b dargestellt. Im vorliegenden Beispiel sind auf der POF 4 Längenbereiche L entstanden, in denen die POF 4 in gleichem Umfang abgetragen worden ist. Im dargestellten Beispiel ist die POF 4 bis auf die Hälfte ihres Durchmessers abgetragen worden.

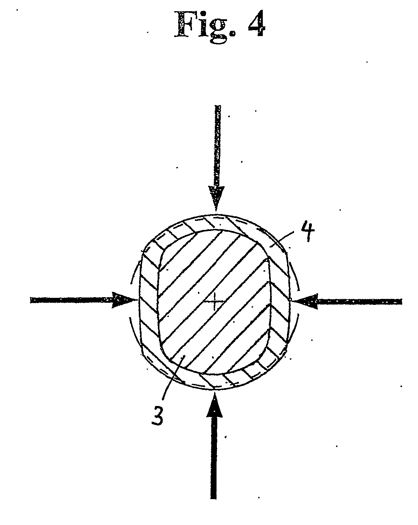

Um aus der so bearbeiteten POF 4 die für die Erstellung eines Kopplers benötigten POF-Stücke herzustellen, ist es nun nurmehr erforderlich, die lange POF 4 in Stücke zu zerschneiden. Fig. 4 gibt durch Pfeile an, an welchen Stellen die POF 4 zu zerschneiden ist. Das Zerschneiden erfolgt zweckmäßigerweise erst nach dem Abwickeln der bearbeiteten POF 4 vom Wickeldorn 3, um Schnittflächen zu erzeugen, die senkrecht zur Achsrichtung der POF 4 verlaufen.

Die Länge der hergestellten POF-Stücke hängt vom Abstand der Sektoren großen und kleinen Radius' des Wickeldorns 3 und somit maßgeblich vom Durchmesser des Wickeldorns 3 ab, der nach den Wünschen des Verwenders gestaltet werden kann. Für die Praxis hat es sich als ausreichend erwiesen, wenn eine mit Polyethylen ummantelte POF von 2,2 mm Außendurchmesser, die einen aktiven Kern von 1 mm Durchmesser hat, auf einer Länge von etwa 10mm auf einen halbkreisförmigen Querschnitt nach dem erfindungsgemäßen Verfahren abgedreht wird. Bei anderen Faserdurchmessern sind die abzudrehenden Längenabschnitte entsprechend anzupassen. Beispielsweise sollte eine POF mit einem aktiven Kern eines Durchmessers von 3 mm auf einer Länge von etwa 50 mm auf den halbkreisförmigen Querschnitt abgedreht werden.

Es versteht sich, dass die Schneide des Drehmeißels 6 eine wirksame Breite hat, die wenigstens geringfügig größer als der Vorschub des Drehmeißels 6 längs des Wickeldorns pro Umdrehung desselben ist. Für die Erzielung einer hohen Oberflächengüte der mit dem Drehmeißel 6 bearbeiteten Abschnitte der POF besteht der Drehmeißel vorzugsweise aus Diamant.

Vor dem Zusammenfügen der Einzelteile des Kopplers ist es günstig, wenn, wie bereits eingangs erwähnt, die polierten Flächen der POFs beschichtet werden, beispielsweise im Vakuum mit einer 100 nm dicken Schichtfolge aus SiO₂, Ag, SiO₂, um die Übersprechdämpfung zu vergrößern. Andere Beschichtungsarten sind ebenfalls möglich, wie bereits erwähnt, vorzugsweise 100 nm HMDS als Unterlage, dann 100 nm Al oder Ag als Reflexionsschicht und wieder 100 nm HMDS als Deckschicht.

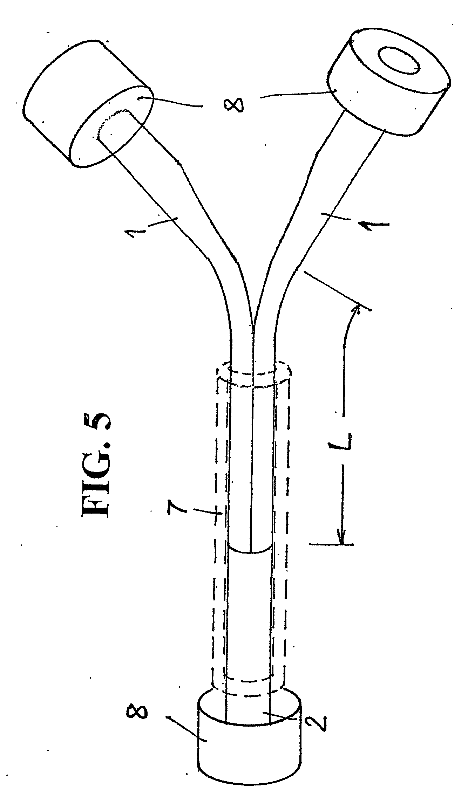

Fig. 5 zeigt einen Koppler, der mit zwei nach der Erfindung bearbeiteten POF-Stücken und einem dritten POF-Stück runden Querschnitts hergestellt ist. Der Koppler nach Fig. 5 hat zwei POF-Stücke 1 jeweils aus einer Lichtleitfaser runden Querschnitts, die jeweils auf einem Längenabschnitt L nach dem erfindungsgemäßen Verfahren auf die Hälfte ihres Durchmessers abgedreht worden sind und dort somit einen halbkreisförmigen Querschnitt aufweisen. Zum Koppler gehört weiterhin ein drittes POF-Stück 2, das runden Querschnitt gleichen Durchmessers wie der Durchmesser im unbearbeiteten Bereich der anderen POF-Stücke 1 aufweist. Die beiden bearbeiteten POF-Stücke 1 sind wenigstens auf einem Teil ihres bearbeiteten Längenabschnitts L vollständig entmantelt bzw. von ihrem Mantel 8 befreit und einander parallel zusammengefügt und von einer Seite in eine Hülse 7 eingesteckt, die in Fig. 5 in Phantomlinien dargestellt ist. Die dritte POF 2 ist ebenfalls wenigstens in ihrem Endbereich entmantelt und von der anderen Seite in dieselbe Hülse 7 eingesteckt. Die einander gegenüberstehenden Stirnflächen der POF-Stücke 1 und 2 sind poliert und stoßen aneinander an. Die POF-Sfücke 1 und 2 können in der Hülse 7 geklemmt sein, es ist auch möglich, sie miteinander mittels eines transparenten Klebers zu verkleben und in der Hülse 7 zu verkleben. Die Stirnflächen der POF-Stücke 1 und 2 können ebenfalls mittels eines transparenten Klebers miteinander verklebt sein.

## Patentansprüche

1. Verfahren zum Erzeugen von Planflächen am Umfang optischer Polymerfasern runden Querschnitts durch spanabhebende Bearbeitung, bei dem die Polymerfaser um einen Wickeldorn gewickelt wird, **dadurch gekennzeichnet, dass** die Polymerfaser in mehreren Windungen auf einen Wickeldorn aufgewickelt wird, der einen insgesamt unrunden Querschnitt mit wenigstens einem radial vorstehenden Sektor aufweist, in dem der Radius konstant ist, und dass mit Hilfe eines'Drehmeißels hoher Güte die Polymerfaser in dem vorstehenden Sektor des Wickeldorns abgedreht wird.

2. Verfahren zum Erzeugen von Planflächen am Umfang optischer Polymerfasern runden Querschnitts durch spanabhebende Bearbeitung, bei dem die Polymerfaser um einen Wickeldorn gewickelt wird, **dadurch gekennzeichnet, dass** die Polymerfaser in mehreren Windungen auf einen Wickeldorn aufgewickelt wird, der einen insgesamt unrunden Querschnitt mit wenigstens einem radial vorstehenden Abschnitt aufweist, in dem der Radius des Querschnitts von einem Scheitel ausgehend, der den größten Radius aufweist, beidseitig mit zunehmendem Umfangswinkelabstand von dem Scheitel linear abnimmt, und dass mit Hilfe eines Drehmeißels hoher Güte die Polymerfaser in dem vorstehenden Abschnitt des Wickeldorns abgedreht wird.

3. Verfahren nach Anspruch 1 oder 2, **dadurch gekennzeichnet, dass** für den Drehvorgang ein Diamantdrehmeißel verwendet wird.

4. Verfahren nach einem der Ansprüche 1 bis 3, **dadurch gekennzeichnet, dass** die Polymerfaser auf einen Halbkreisquerschnitt abgedreht wird.

5. Verfahren nach einem der Ansprüche 1 bis 4, **dadurch gekennzeichnet, dass** die Polymerfaser während des Drehvorgangs unter einer Zugspannung gehalten wird.

6. Verfahren nach einem der Ansprüche 1 bis 5, **dadurch gekennzeichnet, dass** die abgedrehten Flächen im Vakuum mit einer Schichtenfolge versehen werden, die Al oder Ag, unterlegt und abgedeckt von SiO₂ oder HMDS, enthält.

7. Verfahren nach Anspruch 6, **dadurch gekennzeichnet, dass** die Schichten jeweils 100 nm dick aufgetragen werden.

8. Vorrichtung zum Erzeugen von Planflächen am Umfang optischer Polymerfasern runden Querschnitts durch spanabhebende Bearbeitung, mit einem Wickeldorn zur Aufnahme einer Polymerfaser, **gekennzeichnet durch** eine Drehbank mit einem Werkstückhalter in Form eines Wickeldorns (3), der einen insgesamt unrunden Querschnitt mit wenigstens einem vorstehenden Sektor aufweist, in dem der Radius (R) des Querschnitts konstant ist, und der zur Aufnahme mehrerer Windungen einer optischen Polymerfaser (4) eingerichtet ist, und mit einem Drehmeißel (6), der parallel zur Drehachse des Wickeldorns (3) beweglich ist und einen Abstand von der Drehachse hat, der kleiner als der um den Durchmesser der Polymerfaser (4) vergrößerte größte Radius (R) des Wickeldorns (3) und größer als der größte Radius (R) des Wickeldorns (3) ist.

9. Vorrichtung zum Erzeugen von Planflächen am Umfang optischer Polymerfasern runden Querschnitts durch spanabhebende Bearbeitung, mit einem Wickeldorn zur Aufnahme einer Polymerfaser, **gekennzeichnet durch** eine Drehbank mit einem Werkstückhalter in Form, eines Wickeldorns (3), der einen insgesamt unrunden Querschnitt hat mit wenigstens einem vorstehenden Abschnitt, der einen Scheitel größten Radius' (R) bildet, von dem ausgehend der Radius des Querschnitts beidseitig mit zunehmendem Winkelabstand zu dem Scheitel linear abnimmt, und der zur Aufnahme mehrerer Windungen einer optischen Polymerfaser (4) eingerichtet ist, und mit einem Drehmeißel (6), der parallel zur Drehachse des Wickeldorns (3) beweglich ist und einen Abstand von der Drehachse hat, der kleiner als der um den Durchmesser der Polymerfaser (4) vergrößerte größte Radius (R) des Wickeldorns (3) und größer als der größte Radius (R) des Wickeldorns (3) ist.

10. Vorrichtung nach Anspruch 8 oder 9, **dadurch gekennzeichnet, dass** der Drehmeißel (6) ein Diamantdrehmeißel ist.

11. Vorrichtung nach einem der Ansprüche 8 bis 10, **dadurch gekennzeichnet, dass** der Wickeldorn (3) eine wendelförmig verlaufende Umfangsnut zur Aufnahme der Polymerfaser (4) hat.

## Claims

1. Method for producing planar surfaces at the perimeter of optical polymer fibres of round cross-section by material-removing machining in which the polymer fibre is wound round a winding mandrel, **characterised in that** the polymer fibre is wound in a plurality of windings on a winding mandrel having an overall non-circular cross-section with at least one radially projecting sector in which the radius is constant and that with the aid of a lathe chisel of high quality the polymer fibre is lathed in the projecting sector of the winding mandrel.

2. Method for producing planar surfaces at the perimeter of optical polymer fibres of round cross-section by material-removing machining in which the polymer fibre is wound round a winding mandrel, **characterised in that** the polymer fibre is wound in a plurality of windings on a winding mandrel having an overall non-circular cross-section with at least one radially projecting section in which the radius of the cross-section proceeding from an apex having the largest radius diminishes linearly on both sides with increasing circumferential angular spacing from the apex and that with the aid of a lathe chisel of high quality the polymer fibre is lathed in the projecting section of the winding mandrel.

3. Method according to claim 1 or 2, **characterised in that** for the turning operation a diamond lathe chisel is used.

4. Method according to any of claims 1 to 3, **characterised in that** the polymer fibre is lathed on a semicircular cross-section.

5. Method according to any of claims 1 to 4, **characterised in that** the polymer fibre is held under tension during the turning operation.

6. Method according to any of claims 1 to 5, **characterised in that** the lathed areas are provided with a sequence of layers in vacuum which contains Al or Ag underlaid and covered by SiO₂ or HMDS.

7. Method according to claim 6, **characterised in that** the layers are each applied in a thickness of 100 nm.

8. Device for producing planar surfaces at the perimeter of optical polymer fibres of round cross-section by material-removing machining having a winding mandrel for accommodating a polymer fibre, **characterised by** a turning lathe having a workpiece holder in the form of a winding mandrel (3) which has an overall non-circular cross-section with at least one projecting sector in which the radius (R) of the cross-section is constant and is set up for accommodating a plurality of windings of an optical polymer fibre (4) and having a lathe chisel (6) which is movable parallel to the axis of rotation of the winding mandrel (3) and has a spacing from the axis of rotation which is less than the largest radius (R) of the winding mandrel (3) enlarged by the diameter of the polymer fibre (4) and is greater than the largest radius (R) of the winding mandrel (3).

9. Device for producing planar surfaces at the perimeter of optical polymer fibres of round cross-section by material-removing machining having a winding mandrel for accommodating a polymer fibre, **characterised by** a turning lathe having a workpiece holder in the form of a winding mandrel (3) which has an overall non-circular cross-section with at least one projecting section which forms an apex of maximum radius (R) proceeding from which the radius of the cross-section diminishes linearly on both sides with increasing angular spacing and is set up for accommodating a plurality of windings of an optical polymer fibre (4) and having a lathe chisel (6) which is movable parallel to the axis of rotation of the winding mandrel (3) and has a spacing from the axis of rotation which is less than the largest radius (R) of the winding mandrel (3) enlarged by the diameter of the polymer fibre (4) and is greater than the largest radius (R) of the winding mandrel (3).

10. Device according to claim 8 or 9, **characterised in that** the lathe chisel (6) is a diamond lathe chisel.

11. Device according to any of claims 8 to 10, **characterised in that** the winding mandrel (3) has a peripheral groove running in a spiral for accommodating the polymer fibre (4).

## Revendications

1. Procédé pour générer des surfaces planes sur le pourtour de fibres optiques polymères de section transversale ronde par usinage par enlèvement de copeaux, dans lequel la fibre polymère est enroulée autour d'un mandrin de bobinage, **caractérisé en ce que** la fibre polymère est enroulée en plusieurs spires sur un mandrin de bobinage, qui présente une section transversale non-circulaire dans l'ensemble avec au moins un secteur en saillie radiale, dans lequel le rayon est constant, et que la fibre polymère est tournée dans le secteur en saillie du mandrin de bobinage à l'aide d'un outil de tournage de haute qualité.

2. Procédé pour générer des surfaces planes sur le pourtour de fibres optiques polymères de section transversale ronde par usinage par enlèvement de copeaux , dans lequel la fibre polymère est enroulée autour d'un mandrin de bobinage, **caractérisé en ce que** la fibre polymère est enroulée en plusieurs spires sur un mandrin de bobinage, qui présente une section transversale non-circulaire dans l'ensemble avec au moins une section en saillie radiale, dans laquelle le rayon de la section transversale, à partir d'un sommet qui présente le rayon maximal, décroît linéairement des deux côtés avec une distance angulaire périphérique croissante par rapport au sommet, et que la fibre polymère est tournée dans la section en saillie du mandrin de bobinage à l'aide d'un outil de tournage de haute qualité.

3. Procédé suivant l'une des revendications 1 et 2, **caractérisé en ce qu'**un outil de tournage diamanté est utilisé pour l'opération de tournage.

4. Procédé suivant l'une des revendications 1 à 3, **caractérisé en ce que** la fibre polymère est tournée sur une section transversale semi-circulaire.

5. Procédé suivant l'une des revendications 1 à 4, **caractérisé en ce que** la fibre polymère est maintenue sous une contrainte de traction pendant l'opération de tournage.

6. Procédé suivant l'une des revendications 1 à 5, **caractérisé en ce que** les surfaces tournées sont munies sous vide d'une suite de couches, qui renferme de l'Al ou de l'Ag, avec une sous-couche et une couverture de SiO₂ ou HMDS.

7. Procédé suivant la revendication 6, **caractérisé en ce que** les couches sont respectivement appliquées avec une épaisseur de 100 nm.

8. Dispositif pour générer des surfaces planes sur le pourtour de fibres optiques polymères de section transversale ronde par usinage par enlèvement de copeaux, avec un mandrin de bobinage pour recevoir une fibre polymère, **caractérisé par** un tour avec un porte-pièces en forme d'un mandrin de bobinage (3), qui présente une section transversale non-circulaire dans l'ensemble avec au moins un secteur en saillie, dans lequel le rayon (R) de la section transversale est constant, et qui est conçu pour recevoir plusieurs spires d'une fibre polymère optique (4), et avec un outil de tournage (6), qui est mobile parallèlement à l'axe de rotation du mandrin de bobinage (3) et présente une distance par rapport à l'axe de rotation, qui est plus petite que le rayon (R) maximal, agrandi du diamètre de la fibre polymère (4), du mandrin de bobinage (3) et plus grande que le rayon maximal (R) du mandrin de bobinage (3).

9. Dispositif pour générer des surfaces planes sur le pourtour de fibres optiques polymères de section transversale ronde par usinage par enlèvement de copeaux, avec un mandrin de bobinage pour recevoir une fibre polymère, **caractérisé par** un tour avec un porte-pièces en forme d'un mandrin de bobinage (3), qui a une section transversale non-circulaire dans l'ensemble avec au moins une section en saillie, qui forme un sommet de rayon maximal (R), à partir duquel le rayon de la section transversale diminue linéairement des deux côtés avec une distance angulaire croissante par rapport au sommet, et qui est conçu pour recevoir plusieurs spires d'une fibre polymère optique (4), et avec un outil de tournage (6), qui est mobile parallèlement à l'axe de rotation du mandrin de bobinage (3) et présente une distance par rapport à l'axe de rotation, qui est plus petite que le rayon maximal (R), augmenté du diamètre de la fibre polymère (4), du mandrin de bobinage (3), et plus grande que le rayon maximal (R) du mandrin de bobinage (3).

10. Dispositif suivant l'une des revendications 8 et 9, **caractérisé en ce que** l'outil de tournage (6) est un outil de tournage diamanté.

11. Dispositif suivant l'une des revendications 8 à 10, **caractérisé en ce que** le mandrin de bobinage (3) a une gorge périphérique hélicoïdale pour recevoir la fibre polymère (4).
